Europäisches Patentamt

European Patent Office

Office européen des brevets

(11) Veröffentlichungsnummer: **0 033 013**
**B1**

(12) **EUROPÄISCHE PATENTSCHRIFT**

(45) Veröffentlichungstag der Patentschrift: **20.02.85**

(51) Int. Cl.⁴: **F 16 L 47/06, F 16 L 21/06**

(21) Anmeldenummer: **80108197.7**

(22) Anmeldetag: **24.12.80**

(54) **Muffenrohrverbindung, insbesondere für Kunststoffrohre mit Steckmuffen.**

(30) Priorität: **24.01.80 DE 3002396**
**24.01.80 DE 8001815 U**

(43) Veröffentlichungstag der Anmeldung:
**05.08.81 Patentblatt 81/31**

(45) Bekanntmachung des Hinweises auf die
Patenterteilung:
**20.02.85 Patentblatt 85/08**

(84) Benannte Vertragsstaaten:
**AT BE CH DE FR GB IT LI LU NL SE**

(56) Entgegenhaltungen:
**DE-U-1 708 861**
**FR-A-2 450 403**
**US-A-4 006 757**

(73) Patentinhaber: **DRAKA-PLAST GmbH**
**Flottenstrasse 58**
**D-1000 Berlin 51 (DE)**

(72) Erfinder: **Lüttringhaus, Hermann-Dietrich**
**Hechelstrasse 26**
**D-1000 Berlin 51 (DE)**

(74) Vertreter: **Seiler, Siegfried**
**DEUTSCHE SOLVAY WERKE GmbH**
**Langhansstrasse 6**
**D-5650 Solingen 11 (DE)**

Courier Press, Leamington Spa, England.

EP 0 033 013 B1

## Beschreibung

Die vorliegende Erfindung betrifft eine längskraftschlüssige Steckmuffenverbindung für Rohre, insbesondere für Kunststoffrohre, bei der ein Rohr mit seinem Spitzende in ein erweitertes Muffenende eines anderen Rohres mit geringem radialen Spiel einschiebbar ist, wobei am Spitzende ein ringförmiger Anschlag vorgesehen ist, der nach dem Einstecken des Spitzendes in das Muffenende zur Begrenzung des Einsteckweges an der Stirnfläche des Muffenendes anliegt, wobei das Muffenende eine nach außen gehende Umfangssicke zur Aufnahme einer Ringdichtung zwischen Spitzende und Muffenende aufweist, und wobei zur zugfesten Verbindung der Rohre miteinander ein in Längsrichtung geteiltes Verbindungselement vorgesehen ist, dessen durch Verschlußelemente miteinander verbundene Schalenteile den ringförmigen Anschlag und ein radial nach außen vorspringendes Teil des Muffenendes verriegelnd übergreifen.

Aus der DE—U—1 708 861 ist eine gattungsmäßige Steckmuffenrohrverbindung für Kunststoffrohre bekannt, bei der das eine Rohr einen Muffenteil mit einer Außensicke zur Aufnahme eines Dichtungsringes und eine Innensicke am freien Ende des Muffenteils aufweist und das andere Rohr mit einer den Einsteckweg begrenzenden Außensicke versehen ist. Die Verbindung der beiden Rohre erfolgt durch einen zweiteiligen profilierten Haltering, der zwei ringförmige Vorsprünge aufweist, von denen der eine kürzere in den Ringraum der nach innen gehenden Sicke des muffenartigen Rohrendes und der andere längere hinter die nach außen gehende Sicke des zweiten Rohrendes greift.

Der profilierte Haltering dringt dabei in Form einer kreislinienförmigen Druckstelle in die beiden Sicken, ohne jedoch an den Rohrenden anzuliegen. Dadurch, daß der profilierte Haltering nicht den Rohrenden angepaßt ist und in dem Bereich der den Einsteckweg begrenzenden Außensicke einen ringförmigen Hohlraum aufweist, darf diese Rohrverbindung keinen starken Zugbelastungen ausgesetzt werden. Die Sicken der übergreifenden Rohrmuffe sind unmittelbar am Rohrende angeordnet. Gerade dieses Rohrende ist jedoch bei der Lagerung der Gefahr der Beschädigung an diesen hochbeanspruchten Stellen ausgesetzt, die ein Verrutschen des Halteringes oder eine Undichtigkeit verhindern sollten. Somit ist auch die Beschädigungsgefahr an diesen Verbindungsstellen besonders groß. Eine sichere längskraftschlüssige Verbindung wird durch diese Verbindungsform, insbesondere bei unter Druck stehenden Flüssigkeiten nicht erzielt.

Ziel und Aufgabe der vorliegenden Erfindung ist es, eine Steckmuffenverbindung für Rohre, insbesondere für Kunststoffrohre mit einer möglichst sicheren längskraftschlüssigen Verbindung zu entwickeln. Die Rohre sollen dabei schnell, sicher, arbeitssparend und problemlos verriegelbar bzw. sicher längskraftschlüssig verbindbar sein.

Erfindungsgemäß wird die gestellte Aufgabe dadurch gelöst, daß die Schalenteile die Umfangssicke des Muffenendes übergreifen und an ihrer Innenfläche eine abgestufte Vertiefung aufweisen, die an die Form des ringförmigen Anschlags und der Umfangssicke derart angepaßt ist, daß die Schalenteile sowohl an deren gesamter Oberfläche als auch auf der Außenfläche des Muffenendes beidseits der Umfangssicke und auf der Außenfläche des das Spitzende tragenden Rohres anliegen.

Nach einer bevorzugten Ausführungsform weisen die Schalenteile des Verbindungselementes gleiche Formgebungen und Abmessungen auf.

Vorzugsweise besitzen die Schalenteile auf ihrer Außenfläche beiderseits der Trennfugen verlaufende keilförmige Vorsprünge oder Teile einer schwalbenschwanzähnlichen Führung, denen jeweils ein diese verriegelnd übergreifendes Spannverschlußteil mit einer, den keilförmigen Vorsprüngen oder den Teilen der schwalbenschwanzähnlichen Führung angepaßten keilförmigen oder schwalbenschwanzähnlichen Vertiefung zugeordnet ist. Durch diese spezielle Steckmuffenverbindung wird eine längskraftschlüssige Schnellverriegelung und Schnellverlegung der zu verbindenden Rohre, insbesondere Kunststoffrohre, ermöglicht.

Nach einer bevorzugten Ausführungsform ist entlang mindestens einer Trennfuge ein Schalenteil mit einem oder mehreren Vorsprüngen, Nokken, Fangstiften oder federähnlichen Elementen, vorzugsweise zur Schalenzentrierung versehen, denen entsprechende Ausformungen oder nutähnliche Einbuchtungen des anderen Schalenteiles, zugeordnet sind.

Vorzugsweise weisen die keilförmigen Vorsprünge oder Teile der schwalbenschwanzähnlichen Führung an ihrer der Trennfuge abgewandten Außenkante Rillen, Rippen, Zähne oder zahnähnliche Einschnitte als zusätzliche Hilfe zur Selbsthemmung des Verschlusses auf, denen entsprechende Nuten, Rillen zahnähnliche Einschnitte oder Zähne an der Innenkante oder Innenfläche des Spannverschlußteiles zugeordnet sind.

Nach einer bevorzugten Ausführungsform sind die Außen- und/oder Innendurchmesser der Schalenteil zu ihrer axialen Mitte hin vergrößert bzw. vom mittleren Bereich aus zu den Schalenenden hin verringert und die Umfangssicke weist radial nach außen abgeschrägte Wände auf.

Nach einer vorzugsweisen Ausführungsform ist ein geringer Spalt an der Trennfuge der Schalenteile zur Verbesserung der Anlage an die Außenflächen des Muffenendes und des das Spitzende tragenden Rohres ausgebildet.

Der Anschlag weist dabei im Querschnitt eine rechteckige Ausbildung auf, wobei der radiale Überstand über das Rohr dem Außendurchmesser des Muffenendes entspricht.

Die Umfangssicke ist nach einer bevorzugten Ausführungsform (im Querschnitt) trapezförmig.

Die Schalenteile können aus den unterschiedlichsten Materialien, z.B. aus Metall oder Kunststoff, vorzugsweise aus Vinylchloridhomo- oder -copolymerisat, Polyäthylen oder Polypropylen bestehen.

Als Dichtungselemente könnten die an sich bekannten Dichtringe, die bogenförmige Querschnittsformen, U-förmige Profilierungen, im Querschnitt trapezförmige Profilierungen und dgl. aufweisen, Verwendung finden. Bevorzugt werden Dichtungsringe, die an ihrer inneren, zur Rohrmitte gerichteten Fläche einen ringförmig umlaufenden Einschnitt oder ähnliche ringförmig umlaufende nutenförmige Vertiefungen aufweisen, in die Ringe oder ringförmige Federelemente aus härterem elastischem Material eingelegt werden. Durch die Einfügung des Ringes aus härterem elastischen Material wird der Dichtungsring gegen die innere Fläche der Umfangssicke gepreßt bzw. in dieser Lage fixiert.

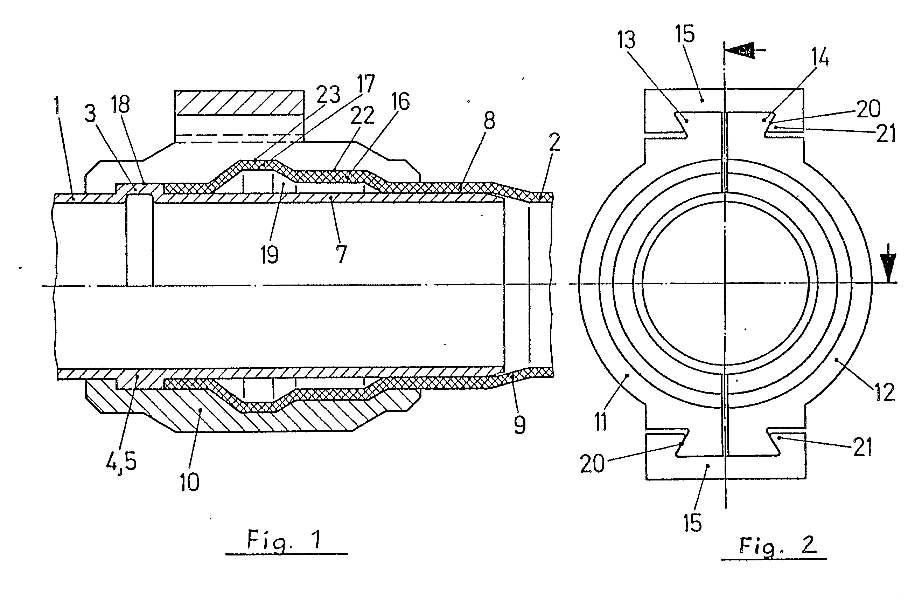

Die beigefügte Zeichnungen (Fig. 1 und 2) geben schematisch ein Ausführungsbeispiel der erfindungsgemäßen Muffenrohrverbindung wieder.

In Fig. 1 ist dargestellt, wie das Rohr 1 mit einem Spitzende 7 in das Muffenende 8 des Rohres 2 eingeschoben ist.

Das Muffenende 8 des Rohres 2 weist eine konische Erweiterung 9 auf die auch stufen — bzw. schulterförmig sein kann. Bis zu dieser konischen Erweiterung ist das abgeschrägte Spitzende des Rohres 1 einschiebbar, ohne daß es die Oberfläche des Innenraumes der Muffe beschädigt. Die Umfangssicke 3 oder ein Wulst 4 oder ein oder mehrere Vorsprünge 5 dienen als "Anschlag" des Muffenendes, wobei das letzte Teilstück des Muffenendes ringförmig das Rohr 1 anliegend umgibt.

In die Umfangssicke 17 und/oder die stufen- oder schulterförmige Erweiterung 16 der Muffe ist ein Dichtungsring oder Dichtungselement 19 eingebracht. Das Verbindungselement 10 übergreift die Umfangssicke 3 oder den Wulst 4 oder den Vorsprung 5 sowie einen Teil des Muffenendes 8. Die Schalenteile 11, 12 des Verbindungselementes 10 weisen an ihrer Innenfläche nutenähnliche oder im Querschnitt trapez-, ring-, bogen- oder stufenförmige Vertiefungen bzw. Ausformugen 18, 22, 23 auf.

In Fig. 2 ist ein Querschnitt durch die Muffenrohrverbindung dargestellt. Die Schalenteile 11, 12 werden im Schnitt gezeigt; sie besitzen Teile einer schwalbenschwanzähnlichen Führung 13, 14, denen jeweils ein Spannverschlußteil 15 zugeordnet ist und auf diese verriegelnd übegreift. Damit ein "Abspringen" des Verschlusses vermieden wird, weisen die schwalbenschwanzähnlichen Führungen eine Nut, einen Einschnitt oder eine im Querschnitt dreieckähnliche oder trapezähnliche Führung 20 auf, der die Verschlußführung 21 des Spannverschlußteiles angepaßt ist.

### Patentansprüche

1. Längskraftschlüssige Steckmuffenverbindung für Rohre, insbesondere für Kunststoffrohre, bei der ein Rohr (1) mit seinem Spitzende (7) in ein erweitertes Muffenende (8) eines andere Rohres (2) mit geringem radialen Spiel einschiebbar ist, wobei am Spitzende (7) ein ringförmiger Anschlag (3, 4, 5) vorgesehen ist, der nach dem Einstecken des Spitzendes (7) in das Muffenende (8) zur Begrenzung des Einsteckweges an der Stirnfläche des Muffenendes (8) anliegt, wobei das Muffenende (8) eine nach außen gehende Umfangssicke (16, 17) zur Aufnahme einer Ringdichtung (19) zwischen Spitzende (7) und Muffenende (8) aufweist, und wobei zur zugfesten Verbindung der Rohre (1, 2) miteinander ein in Längsrichtung geteiltes Verbindungselement (10) vorgesehen ist, dessen durch Verschlußelemente (15) miteinander verbundene Schaltenteile (11, 12) den ringförmigen Anschlag (3, 4, 5) und ein radial nach außen vorspringendes Teil (16, 17) des Muffenendes (8) verriegelnd übergreifen, dadurch gekennzeichnet, daß die Schalenteile (11, 12) die Umfangssicke (16, 17) des Muffenendes (8) übergreifen und an ihrer Innenfläche eine abgestufte Vertiefung (18, 22, 23) aufweisen, die an die Form des ringförmigen Anschlags (3, 4, 5) und der Umfangssicke (16, 17) derart angepaßt ist, daß die Schalenteile (11, 12) sowohl an deren gesamter Oberfläche als auch auf der Außenfläche des Muffenendes (8) beidseits der Umfangssicke (16, 17) und auf der Außenfläche des das Spitzende (7) tragenden Rohres (1) anliegen.

2. Steckmuffenverbindung nach Anspruch 1, dadurch gekennzeichnet, daß die Schalenteile (11, 12) des Verbindungselementes (10) gleiche Formgebungen und Abmessungen aufweisen.

3. Steckmuffenverbindung nach Anspruch 1 oder 2, dadurch gekennzeichnet, daß die Schalenteile (11, 12) auf ihrer Außenfläche beiderseits der Trennfugen verlaufende keilförmige Vorsprünge oder Teile einer schwalbenschwanzähnlichen Führung (13, 14) besitzen, denen jeweils ein diese verriegelnd übergreifendes Spannverschlußteil (15) mit einer, den keilförmigen Vorsprüngen oder den Teilen der schwalbenschwanzähnliichen Führung (13, 14) angepaßten keilförmigen oder schwalbenschwanzähnlichen Vertiefung (20) zugeordnet ist.

4. Steckmuffenverbindung nach einem der Ansprüchen 1—3, dadurch gekennzeichnet, daß entlang mindestens einer Trennfuge ein Schalenteil (11, 12) mit einem oder mehreren Vorsprüngen, Nocken, Fangstiften oder federähnlichen Elementen, vorzugsweise zur Schalenzentrierung versehen ist, denen entsprechende Ausformungen oder nutähnliche Einbuchtungen des anderen Schalenteiles zugeordnet sind.

5. Steckmuffenverbindung nach Anspruch 3 oder 4 dadurch gekennzeichnet, daß die keilförmigen Vorsprünge oder Teile der schwalbenschwanzähnlichen Führung an ihrer der Trennfuge abgewandten Außenkante (20) Rillen, Rippen, Zähne oder zahnähnliche Einschnitte also zusätzliche Hilfe zur Selbsthemmung des Verschlusses aufweisen, denen entsprechende Nuten, Rillen, zahnähnliche Einschnitte oder Zähne an der Innenkante oder Innenfläche (21) des Spannverschlußteiles (15) zugeordnet sind.

6. Steckmuffenverbindung nach einem der Ansprüche 1—5, dadurch gekennzeichnet, daß die Außen- und/oder Innendurchmesser der Schalenteile (11, 12) zu ihrer axialen Mitte hin vergrößert bzw. vom mittleren Bereich aus zu den Schalenenden hin verringert sind und die Umfangssicke (16) radial nach außen abgeschrägte Wände aufweist.

7. Steckmuffenverbindung nach einem der Ansprüche 1—6, dadurch gekennzeichnet, daß ein geringer Spalt an der Trennfuge der Schalenteile (11, 12) zur Verbesserung der Anlage an die Außenflächen des Muffenendes (8) und des das Spitzende tragenden Rohres (1) ausgebildet ist.

8. Steckmuffenverbindung nach einem der Ansprüche 1—7, dadurch gekennzeichnet, daß der Anschlag (3, 4, 5) im Querschnitt eine rechteckige Ausbildung aufweist, wobei der radiale Überstand über das Rohr (1) dem Außendurchmesser des Muffenendes (8) entspricht.

9. Steckmuffenverbindung nach einem der Ansprüche 1—8, dadurch gekennzeichnet, daß die Umfangssicke (17) trapezförmig ist.

**Revendications**

1. Manchon de raccordement enfichable, par application d'une force longitudinale et servant à raccorder des tuyaux, notamment des tuyaux en matière plastique, au moyen duquel un tuyau (1) peut être glissé par son extrémité effilée (7), avec un faible jeu radial, dans l'extrémité evasée d'un manchon (8) d'un autre tuyau (2), l'extrémité effilée (7) étant pourvue d'une butée annulaire (3, 4, 5) qui se trouve placée — après l'enfilage de l'extrémité effilée (7) dans l'extrémité du manchon (8) — contre la face frontale de l'extrémité du manchon (8) comportant une nervure périphérique (16, 17) orientée vers l'extérieur destinée au logement d'un joint d'étanchéité annulaire (19) entre l'extrémité effilée (7) et l'extrémité du manchon (8), et un élément de raccordement (10) subdivisé dans la direction longitudinale étant prévu pour assurer un raccordement des tuyaux (1, 2) résistant à la traction, élément (10) dont les parties enveloppantes (11, 12) reliées entre elles par des organes de serrage (15) recouvrent et verrouillent la butée annulaire (3, 4, 5) et une partie (16, 17) du bout du manchon (8) qui fait saillie radialement vers l'extérieur, caractérisé en ce que les parties enveloppantes (11, 12) recouvrent la nervure périphérique (16, 17) du bout du manchon (8) et présentent sur leur surface intérieure une cavité étagée (18, 22, 23) qui est adaptée à la forme de la butée annulaire (3, 4, 5) et de la nervure périphérique (16, 17) de manière telle que ces parties enveloppantes (11, 12) affleurent aussi bien la surface entière de celles-ci que la surface extérieure de l'extrémité du manchon (8), des deux côtés de la nervure périphérique (16, 17), ainsi que la surface extérieure du tuyau (1) comportant l'extrémité effilée (7).

2. Manchon de raccordement enfichable suivant la revendication 1 caractérisé en ce que les parties enveloppantes (11, 12) de l'élément de raccordement (10) ont une forme et des dimensions identiques.

3. Manchon de raccordement enfichable suivant l'une des revendications 1 ou 2 caractérisé en ce que les parties enveloppantes (11, 12) présentent sur leur surface extérieure, des deux côtés des lignes de joint, des parties saillantes en forme de coin ou des parties d'un élément en queue d'aronde (13, 14) auxquelles vient respectivement s'adapter un organe de serrage (15) qui les recouvre et les verrouille, ledit organe (15) étant pourvu d'une cavité (20) en forme de coin ou de partie de queue d'aronde qui correspond aux parties saillantes en forme de coin ou aux parties de queue d'aronde (13, 14).

4. Manchon de raccordement enfichable suivant l'une des revendications 1 ou 3 caractérisé en ce qu'il comprend, le long d'au moins une ligne de joint, une partie enveloppante (11, 12) pourvue d'un ou plusieurs éléments saillants, bossages, pointes d'arrêt ou éléments analogues à des ressorts, de préférence en vue du centrage des parties enveloppantes, éléments auxquels correspondent des cavités particulières ou des dentelures en forme de gorge de l'autre partie enveloppante.

5. Manchon de raccordement enfichable suivant l'une des revendications 3 ou 4 caractérisé en ce que les parties saillantes en forme de coin ou les parties d'élément en queue d'aronde comportent — sur le côté extérieur (20) opposé à celui de la ligne de joint — des rainures, des nervures, des dents ou des incisions analogues à des dents en tant que moyens supplémentaires pour assurer l'autoblocage de la fermeture, l'organe de serrage (15) étant muni de rainures, de gorges, d'incisions analogues à des dents ou de dents correspondantes sur sa surface intérieure ou du côté intérieur (21).

6. Manchon de raccordement enfichable suivant l'une des revendications 1 à 5 caractérisé en ce que les diamètres extérieurs et/ou intérieurs des parties enveloppantes (11, 12) vont en croissant vers leur milieu axial ou vont en décroissant depuis la zone médiane vers les extrémités de l'enveloppe et en ce que la nervure périphérique (16) présente des parois inclinées radialement vers l'extérieur.

7. Manchon de raccordement enfichable suivant l'une des revendications 1 à 6 caractérisé en ce qu'il comporte un petit intervalle dans la ligne de joint des parties enveloppantes (11, 12) afin d'améliorer l'installation sur les surfaces extérieures du bout du manchon (8) et du tuyau (1) comportant l'extrémité effilée.

8. Manchon de raccordement enfichable suivant l'une des revendications 1 à 7 caractérisé en ce que la butée (3, 4, 5) présente, en section transversale, une forme rectangulaire et en ce que le dépassement radial de la butée au-dessus du tuyau (1) correspond au diamètre extérieur du bout du manchon (8).

9. Manchon de raccordement enfichable suivant l'une des revendications 1 à 8 caractérisé en ce que la nervure périphérique (17) présente la forme d'un trapèze.

**Claims**

1. Longitudinally force-locking socket sleeve joint for pipes, in particular for plastic pipes, in which a pipe (1) with its spigot end (7) is insertable into a widened socket end (8) of another pipe (2) with a slight radial play, in which at the spigot end (7) an annular stop (3, 4, 5) is provided, which after the insertion of the spigot end (7) into the socket end (8) rests against the front face of the socket end (8) to limit the path of insertion, in which the socket end (8) has an outwardly extending peripheral bead (16, 17) to receive an annular seal (19) between the spigot end (7) and the socket end (8), and in which for effecting a tensile connection of the pipes (1, 2) to each other, there is provided a connecting element (10) which is divided in a longitudinal direction, the shell parts (11, 12) of which, which are connected with each other by fastening elements (15), overlap in a locking manner the annular stop (3, 4, 5) and a part (16, 17) of the socket end (8) which projects radially outward, characterized in that the shell parts (11, 12) overlap the peripheral bead (16, 17) of the socket end (8) and on their inner surface have a graduated depression (18, 22, 23) which is adapted to the shape of the annular stop (3, 4, 5) and the peripheral bead (16, 17) such that the shell parts (11, 12) rest both on their entire surface and also on the outer surface of the socket end (8) on both sides of the peripheral bead (16, 17) and on the outer surface of the pipe (1) carrying the spigot end (7).

2. Socket sleeve connection according to Claim 1, characterized in that the shell parts (11, 12) of the connecting element (10) have the same profiling and dimensions.

3. Socket sleeve connection according to Claim 1 or 2, characterized in that the shell parts (11, 12) have wedge-shaped projections or parts of a guide (13, 14) similar to a dovetail on their outer surface running on both sides of the planes of separation, to which in each case is associated a connection locking part (15) which overlaps these in a locking manner and which has a recess (20) which is wedge-shaped or similar to a dovetail and is adapted to the wedge-shaped projections or the parts of the guide (13, 14) which is similar to a dovetail.

4. Socket sleeve connection according to one of Claims 1 to 3, characterized in that along at least one plane of separation a shell part (11, 12) is provided with one or more projections, cams, catch pins or spring-like elements, advantageously to centre the shell, with which corresponding protrusions or groove-like indentations of the other shell part are associated.

5. Socket sleeve connection according to Claim 3 or 4, characterized in that the wedge-shaped projections or parts of the guide which is similar to a dovetail have furrows, ribs, teeth or tooth-like notches on their outer edge (20) facing away from the plane of separation as an additional aid in the automatic locking of the closure, with which corresponding grooves, furrows, tooth-like notches or teeth are associated on the inner edge or inner surface (21) of the connection locking part (15).

6. Socket sleeve connection according to one of Claims 1 to 5, characterized in that the outer and/or inner diameters of the shell parts (11, 12) are enlarged toward their axial centre or are reduced from the central region toward the shell ends and the peripheral bead (16) has walls which are slanted radially outward.

7. Socket sleeve connection according to one of Claims 1 to 6, characterized in that a slight clearance is formed at the plane of separation of the shell parts (11, 12) to improve the fit against the outer surfaces of the socket end (8) and of the pipe (1) carrying the spigot end.

8. Socket sleeve connection according to one of Claims 1 to 7, characterzed in that the stop (3, 4, 5) is of a rectangular construction in cross-section, in which the radially projecting length over the pipe (1) corresponds to the external diameter of the socket end (8).

9. Socket sleeve connection according to one of Claims 1 to 8, characterized in that the peripheral bead (17) is trapezoidal.

Fig. 2

Fig. 1